# EUROPÄISCHE PATENTSCHRIFT

(11) **EP 1 870 701 B1**
(45) Veröffentlichungstag und Bekanntmachung des Hinweises auf die Patenterteilung: **04.10.2017**
(21) Anmeldenummer: 07110416.0
(22) Anmeldetag: 15.06.2007
(51) Int. Cl.: G01N 27/12, G01N 33/00

(54) **Anordnung zur Detektion von Luftinhaltsstoffen**
Assembly for detecting air components
Agencement destiné à la détection de substances dans l'air

(30) Priorität: 19.06.2006 DE 102006028406; 20.07.2006 DE 102006033528
(43) Veröffentlichungstag der Anmeldung: 26.12.2007
(73) Patentinhaber: UST Umweltsensortechnik GmbH, 98716 Geschwenda (DE)
(72) Erfinder: Kittelmann, Sven, 99326, Stadtilm (DE); Ewert, Anatolij, 98693, Ilmenau (DE); Kiesewetter, Olaf, 98716, Geschwenda (DE)
(74) Vertreter: Liedtke, Klaus

(56) Entgegenhaltungen:
- EP-A- 0 945 722
- EP-A- 1 602 924
- DAVID W BRAUDAWAY: "Precision Resistors: A Review of the Techniques of Measurement, Advantages, Disadvantages, and Results" IEEE TRANSACTIONS ON INSTRUMENTATION AND MEASUREMENT, IEEE SERVICE CENTER, PISCATAWAY, NJ, US, Bd. 48, Nr. 5, Oktober 1999 (1999-10), XP011024836 ISSN: 0018-9456

## Beschreibung

Die Erfindung betrifft eine Anordnung zur Detektion von Luftinhaltsstoffen, insbesondere zur Detektion von Luftinhaltsstoffen in Gebäuden und Fahrzeugen, bei der auf einem Substrat mehrere für Gas sensitive Wirkschichten sowie ein Heizer angeordnet sind, die mit einer Auswerteeinheit verbindbar sind, wobei der Heizer gleichzeitig ein Temperatursensor ist und der Widerstand des Heizers und die Widerstände der Wirkschichten über Elektroden mit insgesamt n+1 elektrischen Anschlüssen so verbunden sind, dass der Heizer an zwei Anschlüssen und n-1 weitere Anschlüsse mit Verbindungsstellen der Wirkschichten verbunden sind.

Zur Detektion von Luftinhaltsstoffen sind verschiedene Ausführungsformen bekannt, bei denen Metalloxid-Gassensoren verwendet werden, welche insbesondere zur Detektion luftgetragener Schadstoffe verwendet werden.

Nach EP 1 602 924 A2 ist eine Anordnung, zur Detektion von Luftinhaltsstoffen bekannt, bei der auf einem Substrat mehrere für Gas sensitive Wirkschichten sowie ein Heizer angeordnet sind, die mit einer Auswerteeinheit verbindbar sind, wobei die elektrischen Widerstände von n Wirkschichten elektrisch in einer Reihenschaltung verbunden sind, der Heizer gleichzeitig ein Temperatursensor ist und parallel zu dieser Reihenschaltung geschaltet ist. Der elektrische Widerstand des Heizers ist dabei deutlich kleiner ist als die Summe der elektrischen Widerstände der Wirkschichten. Die Heiz- und Wirkwiderstände sind über Elektroden mit insgesamt n+1 elektrischen Anschlüssen so verbunden, dass der Heizer an zwei Anschlüssen und n-1 weitere Anschlüsse mit Verbindungsstellen der Wirkschichten verbunden sind.

Nachteilig ist dabei, dass die an den jeweiligen Wirkschichten ermittelten Einzelwerte nicht getrennt erfasst werden können.

Der Erfindung liegt die Aufgabe zugrunde, eine Anordnung der eingangs genannten Art anzugeben, bei der kostengünstig eine Auswertung mit mehreren sensitiven Schichten möglich ist, wobei auch Aussagen über die Einzelwerte jeder Sensitiven Schicht möglich sind.

Erfindungsgemäß wird die Aufgabe mit einer Anordnung, welche die in Anspruch 1 angegebenen Merkmale enthält, gelöst.

Die Auswerteeinheit enthält einen Auswertewiderstand bekannter Größe.

Da der Sensor bei drei Wirkschichten und einen Heizer aus Kostengründen nur vier elektrische Anschlüsse aufweist, ist eine spezielle Auswerte-Elektronik vorgesehen. Die Sensoranordnung liefert als Auswertesignal Spannungen, die im Verhältnis zu den Gaskonzentrationen, der Anzahl der Ladungsträger und der Gesamtspannung variiert. Deshalb wird mit einer externen Schaltungsanordnung die relative Ladungsträgeränderung durch das Einprägen einer definierten Hilfsladungsträgerkonzentration über das Schalten eines Widerstandes bekannter Größe oder das Anordnen einer Stromquelle realisiert.

Dadurch gelingt mit einfachen Mitteln, die relativen Ladungsträgerkonzentrationsänderungen, die durch die Änderungen der Gaszusammensetzung an der Oberfläche des Sensors hervorgerufen werden, zu nutzen, um diese zu ermitteln.

Da die Wirkschichten mit unterschiedlichen Empfindlichkeiten gegenüber verschiedenen Gasen ausgestattet sind, kann in einem chemisch Merkmalsraum zwischen leicht oxidierbaren, schweroxidierbaren und reduzierbaren Gasen unterschieden werden.

Damit kann mit Hilfe verschiedener Schaltungsvarianten zum Beispiel die Luftqualität sehr gut bestimmt werden. Dies ermöglicht auch eine gute Austauschbarkeit sowie Kalibrierbarkeit des Sensorelementes sowie die Erkennung von Verschmutzung und des Wassergehaltes in der Umgebungsluft.

Die Erfindung sieht vor, dass die Anordnung drei Wirkschichten enthält, die mit vier elektrischen Anschlüssen mit der Auswerteeinheit verbindbar sind.

Die Wirkwiderstände sind in einer Dreieckschaltung angeordnet. Bei der Dreieckschaltung sind zwei Knotenpunkte mit elektrischen Anschlüssen verbunden.

Viele Sensorenwendungen erfordert Auswerteverfahren, die kostengünstig realisierbar sind. Die häufig verwendete Spannungsversorgung aus 110-220V Wechselspannungsnetzen ist oft nur mit teuren Transformatoren realisierbar. Die erfindungsgemäße Anordnung sieht hierzu vor, dass der Heizer aus zwei Teilwiderständen besteht, wobei die Verbindungsstelle der Teilwiderstände mit den Wirkschichten verbunden ist. Dabei ist es zweckmäßig, dass ein Teilwiderstand einen geringeren Widerstandwert als der zweite Teilwiderstand aufweist. In diesem Fall liegt nicht die volle Spannung des Heizers an den Wirkschichten an, sodass die Spannung zur Erzeugung der Wärme und die Spannung zur elektrischen Versorgung der Wirkschichten unterschiedlich sein können. Ebenso wird der Teilwiderstand auf dem Sensorchip zweckmäßig so angeordnet werden, dass eine enge Temperaturkopplung über das Substrat ermöglicht wird.

Ferner ist es möglich, dass der Teilwiderstand durch entsprechende Dotierungen einen geringen Temperaturkoeffizienten aufweist.

Die Erfindung wird im Folgenden anhand eines Ausführungsbeispieles näher erläutert.

In der zugehörigen Zeichnung zeigen:
- Figur 1: eine nicht erfindungsgemäße Sensoranordnung mit zusätzlichem Auswertewiderstand,
- Figur 2: eine erfindungsgemäße Sensoranordnung, bei der die Wirkwiderstände in einem Dreieck geschaltet sind,
- Figur 3: eine nicht erfindungsgemäße Sensoranordnung,

- Figur 4: eine nicht erfindungsgemäße Sensoranordnung, bei der die Wirkwiderstände in einem Stern geschaltet sind,
- und Figur 5: eine nicht erfindungsgemäße Sensoranordnung, bei der die Wirkwiderstände in Reihe geschaltet sind.

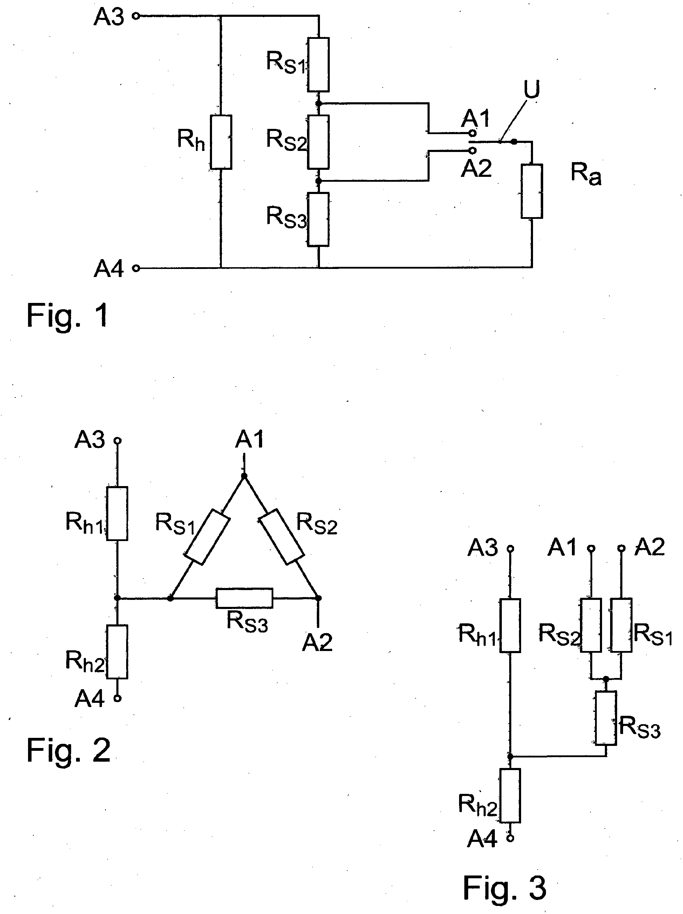

In **Figur 1** ist das Ersatzschaltbild einer nicht erfindungsgemäße Sensoranordnung dargestellt. Die drei Widerstände Rs1, Rs2 und Rs3 der Wirkschichten S sind in Reihe geschaltet und der Heiz- und Temperaturmesswiderstand Rh ist parallel zu dieser Reihenschaltung angeordnet. Hierzu wird ein Platinwiderstand verwendet, der bei 0°C einen elektrischen Widerstandswert von (5 ... 150) Ohm, bevorzugt von (10 ... 30) Ohm aufweist. Dieser Wert ist deutlich kleiner als die Summe der Wirkwiderstände Rs1, Rs2 und Rs3 der Wirkschichten S, die jeweils Werte von 1 kOhm bis 10 MOhm, bevorzugt von (10 bis 100) kOhm, aufweisen. Der Heizwiderstand Rh ist mit den beiden elektrischen Anschlüsse A3 und A4 verbunden. Die Anschlüsse A1 und A2 sind mit den elektrischen Verbindungsstellen der Wirkwiderstände Rs1-Rs2 und Rs2-Rs3 verbunden. Die Sensoranordnung ist mit einer nicht dargestellten Auswerteeinheit verbunden. Die Verbindung zwischen Sensoranordnung und Auswerteeinheit erfolgt über einen Auswertewiderstand Ra von bekannter Größe. In dieser Ausführungsform ist der Auswertewiderstand Ra über einen Umschalter U je nach Schalterstellung entweder parallel zu dem einzelnen Wirkwiderstand Rs3 oder parallel zur Reihenschaltung der beiden Wirkwiderstände Rs2 + Rs3 geschaltet.

**Figur 2** zeigt eine erfindungsgemäße Ausführung, bei der drei Wirkwiderstände (Rs1, Rs2, Rs3) in Dreieckschaltung angeordnet, wobei zwei Knotenpunkte mit elektrischen Anschlüssen (A1, A2) und der dritte Knotenpunkt mit dem Heizer (H) verbunden ist. Der Heizer (H) besteht aus zwei Teilwiderständen (Rh1, Rh2), wobei die Verbindungsstelle der Teilwiderstände (Rh1, Rh2) mit den Wirkschichten (S) verbunden ist. Dadurch ist es möglich die Wirkschichten (S) so anzuordnen, dass nur der an einem der beiden Teilwiderstände (Rh1, Rh2) anliegende Spannungsabfall an den Wirkschichten (S) anliegt und der Spannungsabfall über den zweiten Teilwiderstand nur zur Heizung verwendet werden kann, sodass die Spannungsversorgung der Wirkschichten (S) mit einfachen Mitteln ohne Transformator erfolgen kann.

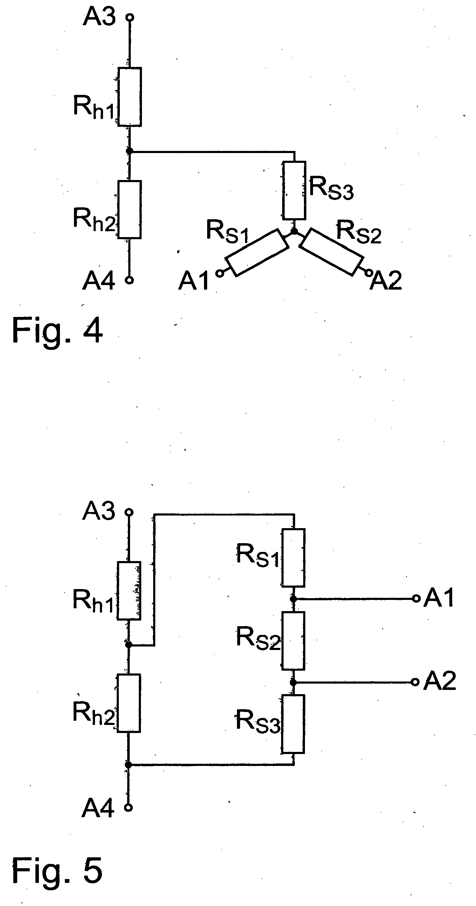

Die **Figuren 3 bis 5** zeigen weitere nicht erfindungsgemäße Ausführungsformen für die Anordnung der Wirkwiderstände Rs.
Bei der in Figur 3 dargestellten Anordnung bilden die drei Wirkwiderstände Rs eine Reihenschaltung aus dem Einzelwiderstand Rs3 und zwei Parallelwiderständen Rs1 und Rs2.
Bei der in Figur 4 dargestellten Anordnung bilden die drei Wirkwiderstände Rs1, Rs2 und Rs3 eine Sternschaltung.
Bei der in Figur 5 dargestellten Anordnung bilden die drei Wirkwiderstände Rs1, Rs2 und Rs3 eine Reihenschaltung.

Der an die Anschlüsse A1 und A2 anschließbare Auswertewiderstand Ra wurde in den Figuren 2 bis 5 nicht dargestellt. Er kann aber auch bei diesen Ausführungsformen in der bei der Erläuterung von Figur 1 beschriebenen Weise verwendet werden.

### BEZUGSZEICHENLISTE

- H: Heizer
- S: Wirkschicht
- A: elektrischer Anschluss
- Rh: Heizwiderstand
- Rs: Wirkwiderstand
- Ra: Auswertewiderstand
- E: Auswerteeinheit
- U: Umschalter

## Patentansprüche

1. Anordnung zur Detektion von Luftinhaltsstoffen, insbesondere zur Detektion von Luftinhaltsstoffen in Gebäuden und Fahrzeugen, bei der auf einem Substrat (1) mehrere für Gas sensitive Wirkschichten (S) sowie ein Heizer (H) angeordnet sind, die mit einer Auswerteeinheit (E) verbunden sind, wobei der Heizer (H) gleichzeitig ein Temperatursensor ist und der Widerstand (Rh) des Heizers (H) und die Wirkwiderstände (Rs) der Wirkschichten (S) über Elektroden mit insgesamt vier elektrischen Anschlüssen (A1 bis A4) so verbunden sind, dass der Heizer an zwei Anschlüssen (A3, A4) und zwei weitere Anschlüsse (A1, A2) mit Verbindungsstellen der Wirkschichten (S) verbunden sind, wobei
- die Auswerteeinheit (E) einen Auswertewiderstand (Ra) und einen Umschalter (U) enthält,
- der Heizer (H) aus zwei Teilwiderständen (Rh1, Rh2) besteht, wobei die Verbindungsstelle der Teilwiderstände (Rh1, Rh2) mit den Wirkschichten (S) verbunden ist,
- ein Teilwiderstand (Rh1) einen geringeren Widerstandwert als der zweite Teilwiderstand (Rh2) aufweist,
- die Anordnung drei Wirkschichten (S) enthält, die mittels zwei elektrischen Anschlüssen (A1, A2) mit der Auswerteeinheit (E) verbindbar sind, wobei
- drei Wirkwiderstände (Rs) in Dreieckschaltung angeordnet sind, wobei zwei Knotenpunkte mit elektrischen Anschlüssen (A1, A2) und der dritte Knotenpunkt mit der verbindungsstelle der Teilwiderstände (Rh1, Rh2) verbunden ist.

## Claims

1. Arrangement for detecting air constituents, in particular for detecting air constituents in buildings and vehicles, in which arrangement a plurality of active layers (S), which are sensitive to gas, and also a heater (H) which are connected to an evaluation unit (E) are arranged on a substrate (1), wherein the heater (H) is simultaneously a temperature sensor and the resistor (Rh) of the heater (H) and the active resistors (Rs) of the active layers (S) are connected to a total of four electrical connections (A1 to A4) via electrodes such that the heater, at two connections (A3, A4), and two further connections (A1, A2) are connected to connecting points of the active layers (S), wherein
- the evaluation unit (E) contains an evaluation resistor (Ra) and a changeover switch (U),
- the heater (H) comprises two resistor elements (Rh1, Rh2), wherein the connecting point of the resistor elements (Rh1, Rh2) is connected to the active layers (S),
- one resistor element (Rh1) has a lower resistance value than the second resistor element (Rh2),
- the arrangement contains three active layers (S) which are connectable to the evaluation unit (E) by means of two electrical connections (A1, A2), wherein
- three active resistors (Rs) are connected in delta, wherein two node points is connected to electrical connections (A1, A2) and the third node point is connected to the connecting point of the resistor elements (Rh1, Rh2).

## Revendications

1. Arrangement de détection de substances contenues dans l'air, notamment de détection de substances contenues dans l'air dans des bâtiments et des véhicules, dans lequel plusieurs couches actives (S) sensibles au gaz ainsi qu'un élément chauffant (H) sont disposés sur un substrat (1), lesquelles sont reliées à une unité d'interprétation (E), l'élément chauffant (H) étant en même temps un capteur de température et la résistance (Rh) de l'élément chauffant (H) et les résistances actives (Rs) des couches actives (S) étant reliées par le biais d'électrodes à un total de quatre bornes électriques (A1 à A4) de sorte que l'élément chauffant est relié à deux bornes (A3, A4) et deux bornes supplémentaires (A1, A2) sont reliées à des points de liaison des couches actives (S),
- l'unité d'interprétation (E) contenant une résistance d'interprétation (Ra) et un inverseur (U),
- l'élément chauffant (H) se composant de deux résistances partielles (Rh1, Rh2), le point de liaison des résistances partielles (Rh1, Rh2) étant relié aux couches actives (S),
- une résistance partielle (Rh1) possédant une valeur de résistance plus faible que celle de la deuxième résistance partielle (Rh2),
- l'arrangement contenant trois couches actives (S) qui peuvent être reliées à l'unité d'interprétation (E) au moyen de deux bornes électriques (A1, A2),
- trois résistances actives (Rs) étant branchées en un circuit en triangle, deux points nodaux étant reliés aux bornes électriques (A1, A2) et le troisième point nodal au point de liaison des résistances partielles (Rh1, Rh2).
